# EUROPÄISCHE PATENTSCHRIFT

(11) **EP 2 598 848 B1**
(45) Veröffentlichungstag und Bekanntmachung des Hinweises auf die Patenterteilung: **23.10.2019**
(21) Anmeldenummer: 11725773.3
(22) Anmeldetag: 20.06.2011
(51) Int. Cl.: G01F 25/00, G01N 11/16, G01N 9/00, G01F 23/24, G01F 23/296, G01F 23/26

(54) **VORRICHTUNG ZUR BESTIMMUNG UND/ODER ÜBERWACHUNG EINES VORGEGEBENEN FÜLLSTANDS**
DEVICE FOR DETERMINING AND/OR MONITORING A PRESCRIBED FILL LEVEL
DISPOSITIF DE DÉTERMINATION ET/OU DE SURVEILLANCE D'UN NIVEAU DE REMPLISSAGE PRÉDÉFINI

(30) Priorität: 28.07.2010 DE 102010038535
(43) Veröffentlichungstag der Anmeldung: 05.06.2013
(73) Patentinhaber: Endress+Hauser SE+Co. KG, 79689 Maulburg (DE)
(72) Erfinder: URBAN, Martin, 79541 Lörrach (DE); PFEIFFER, Helmut, 79585 Steinen (DE); DREYER, Volker, 79541 Lörrach (DE)
(74) Vertreter: Andres, Angelika Maria
(86) Internationale Anmeldenummer: PCT/EP2011/060195
(87) Internationale Veröffentlichungsnummer: WO 2012/013422

(56) Entgegenhaltungen:
- WO-A1-03/052360
- DE-A1- 3 215 040
- DE-A1-102004 045 765
- DE-U1- 20 320 382
- FR-A1- 2 265 084

## Beschreibung

Die vorliegende Erfindung betrifft eine Vorrichtung zur Bestimmung und/oder Überwachung zumindest eines Füllstandes eines Mediums in einem Behälter, mindestens umfassend eine kapazitive oder konduktive Sondeneinheit mit mindestens einer Elektrode und eine Regel-/Auswerteeinheit.

Zur Bestimmung bzw. Überwachung eines Grenzfüllstands eines Mediums in einem Behälter sind verschiedenartige Messgeräte bekannt, die auf verschiedenen Messprinzipien beruhen, wobei die Wahl des Messgerätes von dem jeweiligen Anwendungsgebiet abhängt. Beispielsweise werden für leitfähige Flüssigkeiten bevorzugt konduktive Sensoren verwendet, bei welchen der Widerstand zwischen einer in den Behälter eingebrachten Stabelektrode und der Behälterwand gemessen wird. Für Medien mit einer geringen Leitfähigkeit ist die konduktive Messung jedoch erschwert oder gar nicht möglich. Bei nicht leitenden Flüssigkeiten kommen häufig kapazitive Sensoren zum Einsatz, welche ebenfalls eine oder mehrere Elektroden aufweisen und welche die Kapazität zwischen einer Elektrode und der Behälterwand bestimmen. Das Medium wirkt hierbei als Dielektrikum. Unabhängig von der Leitfähigkeit einer Flüssigkeit können vibronische Grenzstandschalter in Form eines Membranschwingers oder einer Schwinggabel eingesetzt werden, welche das Medium an Hand der veränderten Schwingungseigenschaften eines zu Schwingungen angeregten Elements detektieren. Vibronische Grenzstandschalter können jedoch in hochviskosen oder ausgasenden Medien fehlerhafte Messergebnisse liefern. Ein für all diese Anwendungen gleichermaßen geeignetes Messgerät ist bislang nicht bekannt.

Das Patentdokument DE 10 2004 0450765 A1 beschreibt eine Vorrichtung zur Füllstandmessung, welche nach zwei Messprinzipien arbeitet.

Die Aufgabe der Erfindung besteht daher darin, eine Vorrichtung zur Füllstandsmessung mit einer erhöhten Anwendungsbandbreite bereit zu stellen.

Die Aufgabe wird dadurch gelöst, dass die Elektrode als ein Hohlkörper ausgestaltet ist, dass ein in den Behälter hineinragender Endbereich der Elektrode als schwingfähige Membran ausgebildet ist, dass an einer Innenseite der Membran eine Antriebs-/Empfangseinheit angeordnet ist, welche die Membran zu mechanischen Schwingungen anregt und mechanische Schwingungen von dieser empfängt und in ein elektrisches Empfangssignal umwandelt, und dass die Regel-/Auswerteeinheit die Elektrode zumindest zeitweise mit einer Spannung beaufschlagt und den Füllstand des Mediums kapazitiv oder konduktiv bestimmt, und/oder dass die Regel-/Auswerteeinheit die Antriebs-/Empfangseinheit zumindest zeitweise mit einem Anregesignal beaufschlagt und aus dem elektrischen Empfangssignal den Füllstand des Mediums bestimmt.

Die Sondeneinheit bietet nicht nur die Möglichkeit zur kapazitiven oder konduktiven Füllstandsmessung, sondern zusätzlich zur vibronischen Bestimmung des Füllstands. Hierdurch kann die Prozessgröße Grenzfüllstand in unabhängiger Weise redundant bestimmt werden, sodass eine Kontrollmöglichkeit für die Information über den Füllstand geschaffen ist. Versagt eines der beiden Messprinzipien, kann durch die Messung mit dem anderen Prinzip weiterhin gewährleistet werden, dass der Füllstand korrekt bestimmt und angezeigt wird. Dies erhöht die Sicherheit einer Einrichtung zur Füllstandsüberwachung. Weiterhin ist es durch die Ausgestaltung der Vorrichtung möglich, weitere Prozessgrößen wie die Viskosität und/oder die Dichte des Mediums zu bestimmen. Es handelt sich somit auch um einen multifunktionalen bzw. multivariablen Sensor.

Der Füllstand wird vorzugsweise ständig mittels zwei Messverfahren bestimmt. Andererseits kann in Anwendungen mit wechselnden Prozessbedingungen zwischen den Messprinzipien gewechselt und das für die jeweiligen Bedingungen am besten geeignete Messverfahren verwendet werden. Auf Grund seiner vielseitigen Einsatzmöglichkeiten kann das Messgerät im Voraus und auf Lager beschafft werden, ohne die Medieneigenschaften am späteren Einsatzort kennen zu müssen.

Weiterhin besteht die Möglichkeit, bestehende vibronische Messgeräte nachträglich mit einer oder mehreren voneinander isolierten Elektroden auszustatten, um so die zusätzliche kapazitive oder konduktive Messung zu ermöglichen. Das vibronische Messgerät kann hierbei gleichermaßen ein Membranschwinger, eine Schwinggabel oder ein Einstab sein.

In einer ersten Ausgestaltung der erfindungsgemäßen Lösung bestimmt die Regel-/Auswerteeinheit die Kapazität oder den elektrischen Widerstand zwischen der Elektrode und einer Wandung des Behälters und ermittelt daraus den Füllstand. Bei der konduktiven Messung wird eine Wechselspannung an die Elektrode angelegt, der Behälter geerdet und der Widerstand zwischen Elektrode und Behälter bzw. der Stromfluss bestimmt. Erst wenn das leitfähige Medium in Kontakt mit der Sondeneinheit steht, wird ein Strom bzw. Widerstand gemessen. Bei der kapazitiven Messung des Füllstands eines nicht-leitenden Mediums bildet das Medium ein Dielektrikum, welches zwischen den von der Elektrode und der geerdeten Wandung des Behälters gebildeten Kondensatorplatten angeordnet ist.

Gemäß einer Ausgestaltung weist die Sondeneinheit eine Isolierung auf, welche die Elektrode zumindest abschnittsweise radial umgibt. Die Isolierung dient zum einen dem Schutz der Elektrode vor Korrosion und zum anderen der elektrischen Isolierung zwischen der Elektrode und einem leitfähigen Medium. Bei der kapazitiven Bestimmung des Füllstands eines leitfähigen Mediums dient die Isolierung als Dielektrikum und das Medium an Stelle des Behälters als Gegenelektrode.

In einer Ausgestaltung umfasst die Vorrichtung mindestens eine zweite Elektrode. Die als Hohlkörper ausgestaltete Elektrode kann dann als erste Elektrode bezeichnet werden. In einer hiermit verbundenen weiteren Ausgestaltung umgibt die zweite Elektrode die erste Elektrode und die Isolierung zumindest abschnittsweise koaxial. Die zweite Elektrode kann im Wesentlichen die gleiche Länge wie die erste Elektrode aufweisen, oder kürzer sein und die erste Elektrode nur in einem dem Prozessanschluss benachbarten Teilbereich umgeben. Bevorzugt wird die zweite Elektrode mit der gleichen Spannung wie die erste Elektrode beaufschlagt und dient als Schirmelektrode, um Messfehler bei Ansatzbildung zu vermeiden. In einer alternativen Ausgestaltung zur kapazitiven Bestimmung des Füllstands einer nicht leitfähigen Flüssigkeit umgibt die zweite Elektrode die erste Elektrode koaxial, wobei Medium zwischen die erste und zweite Elektrode eindringen kann. Die zweite Elektrode dient dann als Masserohr und die Kapazitätsmessung findet zwischen den beiden Elektroden statt. Bei einer konduktiven Sonde kann der Strom zwischen jeweils einer Elektrode und der Masse gemessen werden. Die beiden Messwerte werden dann zur Auswertung verglichen. In einer anderen Ausgestaltung einer konduktiven Sondeneinheit bildet die zweite Elektrode die Masse.

Eine Ausgestaltung der Vorrichtung beinhaltet, dass die Sondeneinheit frontbündig in dem Behälter angeordnet ist. Diese Ausgestaltung bietet den Vorteil, dass die Sondeneinheit keine Angriffsfläche für Verschmutzung und Keimanlagerung darstellt, da lediglich der Endbereich der Sondeneinheit mit dem Medium in Berührung kommt. In dieser Ausgestaltung ist mit der konduktiven oder kapazitiven Messung nur ein Grenzfüllstand überwachbar.

In einer alternativen Ausgestaltung ist die Sondeneinheit stabförmig und ragt vollständig in den Behälter hinein. Hiermit verbunden ist eine weitere Ausgestaltung der Vorrichtung, bei welcher die zweite Elektrode beabstandet und elektrisch isoliert von der ersten Elektrode angeordnet ist. Ist der das Medium enthaltende Behälter nicht leitend, dient die zweite stabförmige Elektrode als Masse für die konduktive oder kapazitive Messung. In einer Ausgestaltung sind die zweite Elektrode und die erste Elektrode unterschiedlich lang, sodass ein minimaler und ein maximaler Füllstand konduktiv detektierbar sind. In einer weiteren Ausgestaltung umfasst die Sondeneinheit neben der ersten Elektrode eine zweite und eine dritte Elektrode, wobei die erste und die zweite Elektrode unterschiedlich lang sind und zur Überwachung zweier unterschiedlicher Füllstände dienen und wobei die dritte Elektrode an Stelle des Behälters die Masse bildet.

Gemäß einer Ausgestaltung der Erfindung handelt es sich bei der Antriebs-/Empfangseinheit um mindestens ein piezoelektrisches Element. Hierbei handelt es sich um einen Stapelantrieb aus mehreren übereinander angeordneten piezoelektrischen Elementen oder um einen Bimorphantrieb aus einem piezoelektrischen Element oder mehreren direkt auf der Membran angeordneten Elementen.

Die Erfindung wird anhand der nachfolgenden Figuren näher erläutert.
- Fig. 1: zeigt schematisch verschiedenartige in einen Behälter eingebrachte Füllstandsmessgeräte;
- Fig. 2: zeigt einen schematischen Sondenaufbau.

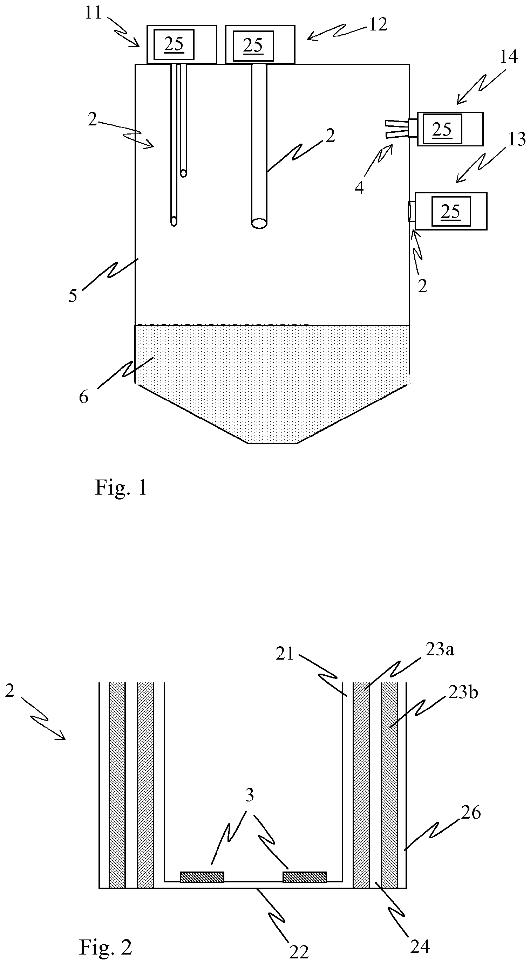

In Fig. 1 ist ein teilweise mit einem flüssigen Medium 6 gefüllter Behälter 5 mit vier unterschiedlichen Messgeräten zur Überwachung eines Füllstands dargestellt. Abgebildet sind ein konduktiver Sensor 11, ein kapazitiver Sensor 12, ein frontbündiger Sensor 13, welcher kapazitiv oder konduktiv misst und eine Schwinggabel 14 als Vertreter eines vibronischen Messgerätes. Die Messgeräte 11, 12 weisen jeweils eine Sondeneinheit 2 auf, welche von oben in den Behälter 5 hineinragt. Die elektronischen Komponenten, wie die Regel-/Auswerteeinheit 25, sind in einem Sensorkopf untergebracht, welcher außerhalb des Behälters verbleibt. Die Sondeneinheit 2 des seitlich im Behälter installierten frontbündigen Sensors 13 schließt bündig mit der Wandung des Behälters 5 ab, sodass nur eine Oberfläche in dem Inneren des Behälters 5 angeordnet ist. Jede der Sondeneinheiten 2 weist eine oder mehrere Elektroden auf und dient der kapazitiven oder konduktiven Erfassung des Füllstands. Derartige Messgeräte sind aus dem Stand der Technik bekannt und werden von der Anmelderin in großer Vielfalt angeboten und vertrieben. Die Erfindung bezieht sich gleichermaßen auf frontbündige Sondeneinheiten, Stabsonden und Seilsonden, bei welchen die Sondeneinheit an einem Seil befestigt ist. Weiterhin betrifft die Erfindung vibronische Messgeräte, d.h. so genannte Schwinggabeln, Einstäbe und Membranschwinger. Als Beispiel für ein vibronisches Messgerät ist eine Schwinggabel 14 dargestellt. Die Schwinggabel 14 besitzt eine schwingfähige Einheit 4, welche zu Schwingungen angeregt wird. Die Schwingungseigenschaften hängen von der Mediumsdichte ab, sodass aus diesen der Bedeckungsgrad mit Medium, sowie im eingetauchten Zustand Dichte und Viskosität des Mediums bestimmbar sind.

Fig. 2 offenbart eine vorteilhafte Ausgestaltung einer erfindungsgemäßen Vorrichtung am Beispiel eines frontbündigen kapazitiven Sensors 13 zum Einsatz in nicht oder nur sehr geringfügig leitfähigen Medien. Dieser ist auf der Höhe im Behälter 5 angeordnet, welche dem zu überwachenden Füllstand entspricht. Dargestellt ist ein Schnitt durch den Endbereich der zylinderförmigen Sondeneinheit 2. Der äußere Aufbau entspricht demjenigen üblicher frontbündiger kapazitiver Sondeneinheiten: eingefasst wird der Aufbau von einem Gehäuse 26, welches auch als Prozessanschluss dient, beispielsweise indem es Gewindeeingriffe aufweist. Konzentrisch angeordnet sind eine erste Elektrode 21 und eine zweite Elektrode 24, sowie zwei Isolierungen 23a, 23b, wobei die innere Isolierung 23a die erste Elektrode 21 elektrisch von der zweiten Elektrode 24 trennt, und wobei die äußere Isolierung 23b die zweite Elektrode 24 elektrisch von dem Gehäuse 26 trennt. Das Gehäuse 26 ist geerdet, während die erste Elektrode 21 und die zweite Elektrode 24 mit der gleichen Wechselspannung versorgt werden. Die zweite Elektrode 24 dient als Guard- oder Schirmelektrode, während mit der zylindrischen ersten Elektrode 21 der Füllstand des Mediums 6 über die Kapazität zwischen der ersten Elektrode 21 und der Wandung des Behälters 5 bzw. dem Gehäuse 26 bestimmt wird. Bevorzugt sind die Elektroden 21, 24 und das Gehäuse 26 aus Edelstahl gefertigt.

Im Gegensatz zu üblichen Messelektroden ist die erste Elektrode 21 ein Hohlkörper. Die dem Medium 6 bzw. dem Inneren des Behälters 5 zugewandte Seitenfläche ist als dünne Membran 22 ausgestaltet und schwingfähig. Auf der Innenseite der Membran 22, d.h. auf der im Inneren der Sondeneinheit 2 liegenden Oberfläche, sind symmetrisch zwei piezoelektrische Elemente als Antriebs-/Empfangseinheit 3 angeordnet. In anderen Ausgestaltungen besteht die Antriebs-/Empfangseinheit 3 aus nur einem piezoelektrischen Element oder aus mehreren in einem Stapel angeordneten piezoelektrischen Elementen. Die Position der Antriebs-/Empfangseinheit 3 auf der Membran 22 hängt im Wesentlichen von der zu erzeugenden Schwingungsmode ab. Bei Anlegen einer elektrischen Wechselspannung an die Antriebs-/Empfangseinheit 3 regt diese die Membran 22 zu mechanischen Schwingungen an. Die Anregung erfolgt hierbei so, dass die Membran 22 in einer Eigenmode schwingt. Mit der dargestellten Anordnung kann beispielsweise die erste Eigenmode angeregt werden, d.h. eine Hälfte der Membran schwingt gegenphasig zu der anderen Hälfte. Ändert sich der Bedeckungsgrad der Membran 22 mit Medium 6, ändert sich auch die Schwingfrequenz, sodass hieraus das Erreichen des Füllstands detektierbar ist. Weiterhin ist mit der aus der kapazitiven Messung gewonnenen Information über den Füllstand aus den mit der vibronischen Messung gewonnenen Informationen über die Schwingungseigenschaften die Dichte oder die Viskosität des Mediums 6 bestimmbar. Die Bestimmung des Füllstands, der Dichte und der Viskosität mittels der Schwingungen der Membran 22 erfolgt analog zu den bekannten Methoden der vibronischen Messung mit Membranschwingern.

Der dargestellte Aufbau entspricht übrigens auch demjenigen einer frontbündigen konduktiven Sonde zur Bestimmung eines Grenzfüllstands eines leitfähigen Mediums.

In einer anderen Betrachtung ist ein Membranschwinger oder eine Schwinggabel mit mindestens einer zusätzlichen isolierten Elektrode ausgestattet, sodass sich ebenfalls ein Aufbau gemäß Fig. 2 ergibt. In diesem Fall bildet das Gehäuse des Membranschwingers bzw. der Schwinggabel, dessen Endbereich von der Membran 22 bzw. der Membran mit darauf angeordneten Gabelzinken gebildet wird, die erste Elektrode 21.

Mit der erfindungsgemäß ausgestalteten Sondeneinheit 2 kann der Füllstand somit auf zweierlei Weise bestimmt werden; vibronisch und kapazitiv bzw. vibronisch und konduktiv. Allen Ausgestaltungen ist gemein, dass es sich bei den Messprinzipien um zwei vollkommen unterschiedliche Messprinzipien handelt, bzw. dass die Messung auf vollkommen unterschiedlichen Eigenschaften des Mediums basiert. Dies sind bei der konduktiven Messung die Leitfähigkeit, bei der kapazitiven Messung die Dielektrizitätskonstante und bei der vibronischen Messung die Dichte des Mediums. Dadurch können die Messungen in einem gemeinsamen Funktionsbereich zu einer besonders zuverlässigen Messung kombiniert werden und darüber hinaus einzeln Messbereiche abdecken, welche mit dem jeweils anderen Messprinzip nicht erreichbar sind. Hierdurch wird zusätzlich die Anwendungsbandbreite erhöht. Der Nachteil der problembehafteten Messung beim Auftreten von Luftblasen im Medium eines Membranschwingers wird dadurch kompensiert, dass eine kapazitive oder konduktive Messung von Luftblasen unbeeinflusst möglich ist. Der Nachteil des konduktiven Messprinzips, dass die Messung in Medien mit sehr geringen Leitwerten nicht möglich ist, wird durch die Unabhängigkeit der vibronischen Messung von der Leitfähigkeit des Mediums kompensiert.

### Bezugszeichenliste

- 11: Konduktiver Sensor
- 12: Kapazitiver Sensor
- 13: Frontbündiger Sensor
- 14: Schwinggabel
- 2: Sondeneinheit
- 21: (Erste) Elektrode
- 22: Membran
- 23a: Isolierung
- 23b: Isolierung
- 24: Zweite Elektrode
- 25: Regel-/Auswerteeinheit
- 26: Gehäuse
- 3: Antriebs-/Empfangseinheit
- 4: Schwingfähige Einheit
- 5: Behälter
- 6: Medium

## Patentansprüche

1. Vorrichtung zur Bestimmung und/oder Überwachung zumindest eines Füllstandes eines Mediums (6) in einem Behälter (5), mindestens umfassend eine kapazitive oder konduktive Sondeneinheit (2) mit mindestens einer Elektrode (21), und eine Regel-/Auswerteeinheit (25),
**dadurch gekennzeichnet,**
**dass** die Elektrode (21) als ein Hohlkörper ausgestaltet ist, dessen in den Behälter (5) hineinragende Stirnfläche (22) als schwingfähige Membran (22) ausgebildet ist,
**dass** an einer Innenseite der Membran (22) eine Antriebs-/Empfangseinheit (3) angeordnet ist, welche die Membran (22) zu mechanischen Schwingungen anregt und mechanische Schwingungen von dieser empfängt und in ein elektrisches Empfangssignal umwandelt,
und
**dass** die Regel-/Auswerteeinheit (25) die Elektrode (21) zumindest zeitweise mit einer Spannung beaufschlagt und den Füllstand des Mediums (6) kapazitiv oder konduktiv bestimmt,
und/oder
**dass** die Regel-/Auswerteeinheit (25) die Antriebs-/Empfangseinheit (3) zur vibronischen Bestimmung des Füllstands zumindest zeitweise mit einem Anregesignal beaufschlagt und aus dem elektrischen Empfangssignal den Füllstand des Mediums (6) bestimmt.

2. Vorrichtung nach Anspruch 1 oder 2,
**dadurch gekennzeichnet,**
**dass** die Vorrichtung dermaßen multifunktional bzw. multivariabl ausgestaltet ist, dass weitere Prozessgrößen wie die Viskosität und/oder die Dichte des Mediums (6) bestimmt werden können.

3. Vorrichtung nach einem der vorhergehenden Ansprüche,
**dadurch gekennzeichnet,**
**dass** die Membran (22) eine Schwinggabel oder einen Einstab aufweist.

4. Vorrichtung nach einem der vorhergehenden Ansprüche ,
**dadurch gekennzeichnet,**
**dass** die Regel-/Auswerteeinheit (25) die Kapazität oder den elektrischen Widerstand zwischen der Elektrode (21) und einer Wandung des Behälters (5) bestimmt und daraus den Füllstand ermittelt.

5. Vorrichtung nach einem der vorhergehenden Ansprüche,
**dadurch gekennzeichnet,**
**dass** die Sondeneinheit (2) eine Isolierung (23a) aufweist, welche die Elektrode (21) zumindest abschnittsweise radial umgibt.

6. Vorrichtung nach einem der vorangehenden Ansprüche,
**dadurch gekennzeichnet,**
**dass** die Vorrichtung mindestens eine zweite Elektrode (24) umfasst.

7. Vorrichtung nach Anspruch 6,
**dadurch gekennzeichnet,**
**dass** die zweite Elektrode (24) die erste Elektrode (21) und die Isolierung (23a) koaxial umgibt.

8. Vorrichtung nach einem der vorangehenden Ansprüche,
**dadurch gekennzeichnet,**
**dass** die Sondeneinheit (2) frontbündig in dem Behälter (5) angeordnet ist.

9. Vorrichtung nach einem der vorhergehenden Ansprüche,
**dadurch gekennzeichnet,**
**dass** die Sondeneinheit (2) stabförmig ist und vollständig in den Behälter (5) hineinragt.

10. Vorrichtung nach Anspruch 6 und 9,
**dadurch gekennzeichnet,**
**dass** die zweite Elektrode (24) beabstandet und elektrisch isoliert von der ersten Elektrode (21) angeordnet ist.

11. Vorrichtung nach einem der vorangehenden Ansprüche,
**dadurch gekennzeichnet,**
**dass** es sich bei der Antrieb-/Empfangseinheit (3) um mindestens ein piezoelektrisches Element handelt.

## Claims

1. Apparatus for determining and/or monitoring at least a level of a medium (6) in a vessel (5), comprising at least a capacitance or conductive probe unit (2) with at least one electrode (21), and an control/evaluation unit (25);
**characterized in that**
the electrode (21) is designed as a hollow body, whose front surface (22) projecting into the vessel (5) is designed as a membrane (22) that is capable of vibrating,
a drive/reception unit (3) is arranged on an inside of the membrane (2), wherein the unit excites said membrane (22) to produce mechanical vibrations and receives mechanical vibrations from said membrane and converts them into an electrical reception signal,
and
**in that** the control/evaluation unit (25) at least temporarily subjects the electrode (21) to a voltage and determines the level of the medium (6) in a capacitive or conductive manner,
and/or
**in that** the control/evaluation unit (25) at least temporarily subjects the drive/reception unit (3) to an excitation signal for the vibronic determination of the level and determines the level of the medium (6) from the electrical reception signal.

2. Apparatus as claimed in Claim 1 or 2,
**characterized in that**
the apparatus is equipped in such a multifunctional or multivariable manner that additional process variables such as the viscosity and/or density of the medium (6) can be determined.

3. Apparatus as claimed in one of the previous claims,
**characterized in that**
the membrane (22) features a tuning fork or a single rod.

4. Apparatus as claimed in one of the previous claims,
**characterized in that**
the control/evaluation unit (25) determines the capacitance or the electrical resistance between the electrode (21) and a wall of the vessel (5), and determines the level from this.

5. Apparatus as claimed in one of the previous claims,
**characterized in that**
the probe unit (2) has an insulation (23a), which radially surrounds the electrode (21) at least in part.

6. Apparatus as claimed in one of the previous claims,
**characterized in that**
the apparatus comprises at least a second electrode (24).

7. Apparatus as claimed in Claim 6,
**characterized in that**
the second electrode (24) coaxially surrounds the first electrode (21) and the insulation (23a).

8. Apparatus as claimed in one of the previous claims,
**characterized in that**
the probe unit (2) is arranged in a front-flush manner in the vessel (5).

9. Apparatus as claimed in one of the previous claims,
**characterized in that**
the probe unit (2) is rod-shaped and projects fully into the vessel (5).

10. Apparatus as claimed in Claim 6 and 9,
**characterized in that**
the second electrode (24) is arranged at a distance from the first electrode (21) and electrically isolated from it.

11. Apparatus as claimed in one of the previous claims,
**characterized in that**
the drive/reception unit (3) is at least a piezoelectric element.

## Revendications

1. Dispositif destiné à la détermination et/ou à la surveillance d'au moins un niveau d'un produit (6) dans un réservoir (5), comprenant au moins une unité de sonde (2) capacitive ou conductive avec au moins une électrode (21), et une unité de régulation / d'exploitation (25) ;
**caractérisé**
**en ce que** l'électrode (21) est conçue en tant que corps creux, dont la surface frontale (22) pénétrant dans le réservoir (5) est conçue en tant que membrane (22) apte à vibrer,
**en ce que** sur une face intérieure de la membrane (2) est disposée une unité d'entraînement / de réception (3), laquelle fait entrer la membrane (22) en vibrations mécaniques et reçoit les vibrations mécaniques de celle-ci, et les convertit en un signal de réception électrique,
et
**en ce que** l'unité de régulation / d'exploitation (25) alimente l'électrode (21) au moins temporairement avec une tension et détermine le niveau du produit (6) par voie capacitive ou conductive,
et/ou
**en ce que** l'unité de régulation / d'exploitation (25) alimente l'unité d'entraînement / de réception (3), en vue de la détermination vibronique du niveau, au moins temporairement avec un signal d'excitation, et détermine à partir du signal de réception électrique le niveau du produit (6).

2. Dispositif selon la revendication 1 ou 2,
**caractérisé**
**en ce que** le dispositif est équipé de façon multifonctionnelle ou multivariable de telle sorte qu'il soit possible de déterminer d'autres grandeurs de process telles que la viscosité et/ou la densité du produit (6).

3. Dispositif selon l'une des revendications précédentes,
**caractérisé**
**en ce que** la membrane (22) comporte une fourche vibrante ou une électrode combinée.

4. Dispositif selon l'une des revendications précédentes,
**caractérisé**
**en ce que** l'unité de régulation / d'exploitation (25) détermine la capacité ou la résistance électrique entre l'électrode (21) et une paroi du réservoir (5), et en déduit le niveau.

5. Dispositif selon l'une des revendications précédentes,
**caractérisé**
**en ce que** l'unité de sonde (2) présente une isolation (23a), laquelle entoure radialement, au moins partiellement, l'électrode (21).

6. Dispositif selon l'une des revendications précédentes,
**caractérisé**
**en ce que** le dispositif comprend au moins une deuxième électrode (24).

7. Dispositif selon la revendication 6,
**caractérisé**
**en ce que** la deuxième électrode (24) entoure coaxialement la première électrode (21) et l'isolation (23a).

8. Dispositif selon l'une des revendications précédentes,
**caractérisé**
**en ce que** l'unité de sonde (2) est disposée de façon affleurante dans le réservoir (5).

9. Dispositif selon l'une des revendications précédentes,
**caractérisé**
**en ce que** l'unité de sonde (2) est en forme de tige et pénètre entièrement dans le réservoir (5).

10. Dispositif selon la revendication 6 et 9,
**caractérisé**
**en ce que** la deuxième électrode (24) est disposée de façon espacée et isolée électriquement de la première électrode (21).

11. Dispositif selon l'une des revendications précédentes,
**caractérisé**
**en ce que**, concernant l'unité d'entraînement / de réception (3), il s'agit d'au moins un élément piézoélectrique.
